# EUROPEAN PATENT APPLICATION

(11) **EP 1 208 731 A2**
(43) Date of publication of application: **29.05.2002**
(21) Application number: 01126968.5
(22) Date of filing: 13.11.2001
(51) Int. Cl.: A01B 59/041

(54) **Protection, operation and adjustment device for a stabilizer for three-point couplings and a stabilizer comprising such a device**

(30) Priority: 16.11.2000 IT BO000663
(71) Applicant: CBM S.p.A., 41100 Modena (IT)
(72) Inventor: Cornia, Enrico Maria, 41100 Modena (IT)
(74) Representative: Provvisionato, Paolo

(57) **Abstract**

A lateral stabilizer for three-point couplings of agricultural tractors is of the type comprising a first stabilizer member (12) and a second stabilizer member (14) coupled with one another telescopically so as to be slidable along an axis and defining, in a telescopic coupling region, spaces (30) between the inner wall of the first stabilizer member (12) and the outer wall of the second stabilizer member (14), and has a protection, operating and adjustment device which comprises guide means (22) for selectively preventing relative rotation of the two stabilizer members (12, 14) about the sliding axis. The guide means include widened portions (21) which can substantially cover the spaces (30) between the two stabilizer members (12, 14) in the telescopic coupling region, in use. The guide means are selectively disconnectible from the stabilizer in order to act as a wrench for the adjustment of the stabilizer.

## Description

The present invention relates to a protection, operation and adjustment device for a stabilizer for three-point couplings. The invention has been developed particularly but not exclusively in relation to an automatic lateral stabilizer suitable for controlling the lateral travel of the lower arms of a three-point coupling of an agricultural tractor.

Various stabilizers for lower arms of three-point couplings are known and generally comprise two members which are slidable relative to one another and are fixed to the tractor body and to the trailer or to the lower arm of the three-point coupling which tows the trailer, respectively. The stabilizers can be locked in a position of fixed length by means of locking systems with pins or the like, or can be left free to lengthen and shorten, following the lateral movements of the trailer or of the lower arms relative to the tractor. Normally, a spring or a plurality of springs oppose the lengthening of the lateral stabilizer in order to bias the trailer or the lower arm towards a predetermined neutral or zero position. Examples of stabilizers of known type are described in the documents DE-3129537, US-3056458 and DE-2416819. The document US-3250524 describes a lateral stabilizer comprising two telescopic elements each of which has engagement means which enable the stabilizer to be mounted so as to be interposed between the tractor body and the trailer or the lateral arms which tow the trailer. During lateral movement of the trailer, the lateral stabilizer lengthens or shortens by virtue of the relative movement of the telescopic elements, which is opposed by a single spring that is compressed both when the stabilizer lengthens and when it shortens.

The document DE-3505243 also describes a lateral stabilizer comprising a tubular body and a shaft which are assembled telescopically and which can also be locked relative to one another in the neutral, central position.

In most of the lateral stabilizers of the prior art it is not possible to adjust their length in the central or neutral position unless one or other end of the stabilizer is released from the tractor or from the lower arm, respectively. A possible solution to this problem is described in the above-mentioned document DE 3505243, which provides for an intermediate bush which is threaded both internally and externally. This solution seems quite complex, bulky and unreliable because of the possibility of one or other thread being filled with earth, refuse or debris.

A particularly effective stabilizer of known type, is described in the applicant's document EP-0998838; this also comprises two telescopic elements which can slide relative to one another and can be locked selectively in a neutral, central position. The length of the stabilizer in its neutral position can be adjusted by virtue of a thread which is formed on the end of one of the two telescopic elements and onto which a shank for connection to the tractor or, more frequently, to the trailer, can be screwed to a greater or lesser extent. To facilitate this adjustment, the end of the threaded telescopic element which projects from the tubular cavity of the other element has a non-circular, preferably oval cross-section to facilitate its gripping during the screwing operation. A selectively releasable catch member or guide means prevents the two telescopic elements from rotating relative to one another about the sliding axis during normal use of the stabilizer.

However, the applicant has found that, in some circumstances, which are rare but which should not be underestimated on that account, the stabilizer of the document EP-0998838 is also subject to problems due to the penetration of gravel, earth, refuse or other debris into the spaces between the two telescopic elements in the region in which one is fitted into the other. This is most likely to occur when the arms of the three-point coupling, along with the lateral stabilizers, are in the raised, rest position relative to the vertical, for example, when the tractor is travelling on the road. On these occasions, the spaces in the region of the coupling between the two telescopic elements face upwards and are more exposed to falling debris thrown up by the tractor's rear tyres.

The fact that the cross-section of one of the two telescopic elements is not circular renders this type of stabilizer even more vulnerable to the problem described above since at least part of the space between the two telescopic elements is relatively wide in comparison with the dimensions of the gravel or debris which may be thrown up by the tractor's wheels.

The object of the present invention is to overcome the disadvantages of the prior art discussed above by means of a solution which is effective and at the same time can be produced simply and economically as well as being reliable and easy to use.

In order to achieve the objects indicated above, the subject of the present invention is a device for a lateral stabilizer of the type indicated above, characterized in that the guide means include widened portions which can substantially cover the spaces between the two stabilizer members in the telescopic coupling region, in use.

The device of the present invention provides, in a simple manner, a screen which protects the spaces between the two elements that can slide relative to one another, but which can be removed quickly and easily for inspection or maintenance of the stabilizer. This very facility to remove the screen enables it to be shaped so as also to serve as a tool or wrench for the adjustment of the length of the stabilizer in the neutral position.

A further advantage of the device of the present invention consists of the fact that it can also act as a guide for the relative sliding of the two movable elements of the stabilizer, at the same time selectively preventing their relative rotation.

The device of the present invention does not however, prevent adjustment of the neutral or central position of the stabilizer by rotation of the tubular central body, either with the stabilizer floating or with the stabilizer locked. This important advantage, already mentioned with reference to the stabilizer described in the applicant's document EP-0998838, can also be achieved by the device of the present invention which, moreover, ensures greater safety for the user during adjustment with the stabilizer floating since, in order to perform the adjustment operation, it is no longer necessary to grip one of the two telescopically slidable elements directly.

Further characteristics and advantages of the invention will become clear from the following description of a preferred embodiment, given with reference to the appended drawings, provided by way of non-limiting example, in which:
Figure 1 is a perspective view of a lateral stabilizer provided with a device according to the present invention, in the fitted position,
Figure 2 is a perspective view similar to Figure 1, in which the device of the present invention is disengaged from the stabilizer body and is ready to be used as a tool or wrench,
Figure 3 is a side view of the stabilizer of Figure 1, taken on the arrow III, and
Figure 4 is a view from above, taken on the arrow IV of Figure 3.

With reference now to the drawings, a lateral stabilizer 10 comprises a tubular shell 12 in which a tubular body 14 is mounted for sliding. One end of the shell 12 is closed by an appendage 13 with an eye or articulation element 15, or another similar element usable for the connection of the stabilizer 10 to the structure of a tractor.

The tubular body 14 projects partially from the shell 12 at the end remote from the appendage 13 and has, at its end 16, an axial thread 17 or other engagement system for a shank of a member for the engagement of the stabilizer on a lower arm of a three-point coupling, not shown in the drawings. The relative positions of the tubular shell 12 and the tubular body 14 can be locked selectively in a predetermined position by a locking member generally indicated 18, the characteristics of which are described in detail in the document EP-0998838, corresponding to Italian patent application BO98A000615, the entire content of which is incorporated herein by reference.

The outer wall of the tubular body 14 is configured in a manner such that it can be engaged by an operating member or wrench 22 so as to be slidable longitudinally but without being able to rotate about the axis of the stabilizer 10.
In particular, but in non-limiting manner, the preferred solution shown in the drawings comprises a prismatic coupling between a pair of flattened, preferably opposed, sides 20 formed at least in the vicinity of the end 16 of the tubular body 14 and two corresponding arms 21 of the wrench 22. A locking portion of the wrench 22 for locking the wrench on the shell 12 of the stabilizer 10 is connected to, or preferably integral with, the arms 21.

In particular, the arms 21 are joined by a crosspiece 23 from which a tubular stem or sleeve 24 extends; the tubular stem or sleeve 24 can be fitted selectively on a rod 25 fixed to the shell 12 and preferably terminating in an end pin 26 in which a hole is formed for housing a retaining ring 28. Naturally, the retaining ring 28 may be replaced by an analogous or similar, selectively removable retaining means which prevents the wrench 22 accidentally slipping off the rod 25, for example, a locking pin, peg, threaded nut, or other similar known systems.

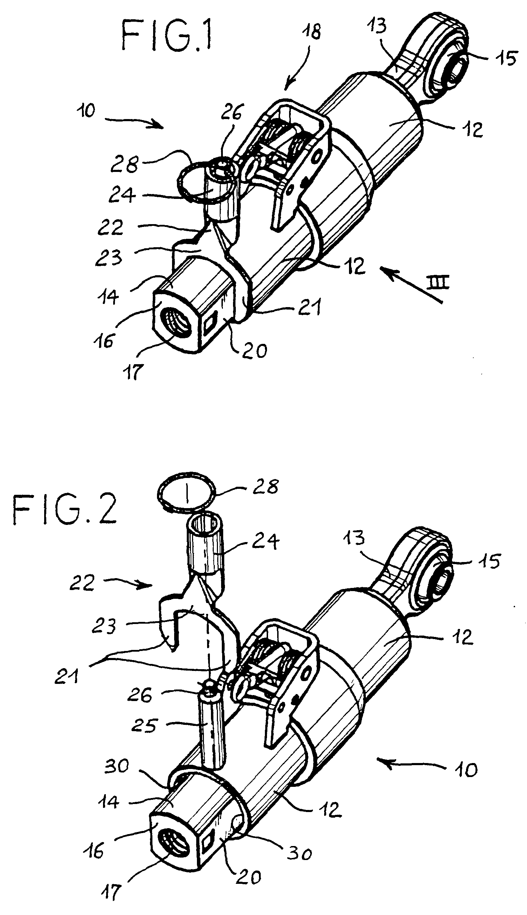

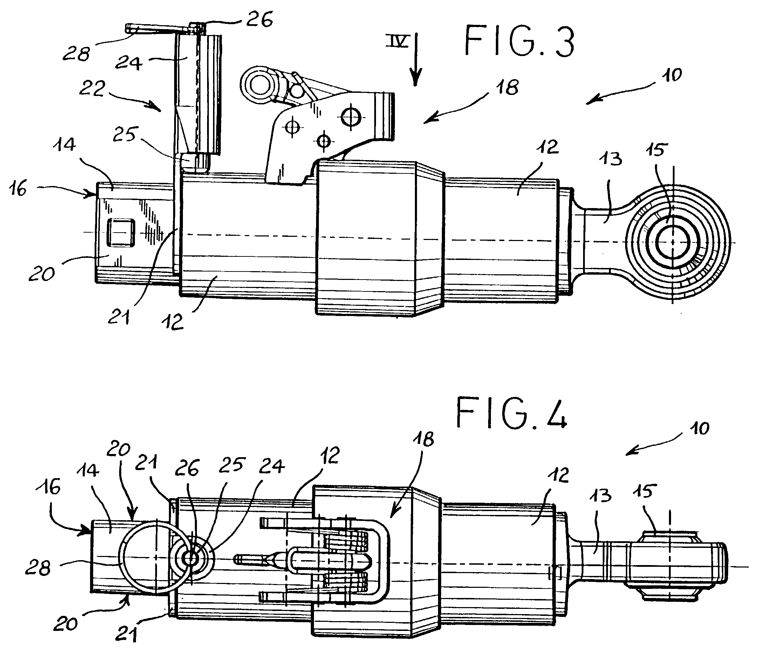

The position of the rod 25 and, more generally, the position in which the wrench 22 is locked on the stabilizer 10, is such that the arms 21 are adjacent the mouth of the shell 12 in which the tubular body 14 is inserted slidably and, moreover, the arms have a transverse width such that, in the assembled configuration shown in Figures 1, 3 and 4, they cover the spaces 30 between the shell 12 and the flattened faces 20 of the tubular body 14.

In use, the wrench 22 is fixed on the stabilizer 10 as shown in Figures 1, 3 and 4, in which the tubular stem 24 is fitted on the rod 25 and is locked in position by means of the ring 28 inserted in the hole formed in the end pin 26. In this position, the fork formed by the arms 21 grasps the tubular body 14 in the region of the flattened walls 20, allowing the tubular body to slide longitudinally relative to the shell 12 but without being able to rotate relative thereto. The wrench 22 and, in particular, its arms 21, cover and protect the mouth of the shell 12 and prevent earth, refuse, or gravel from being introduced into the spaces between the shell and the tubular body 14, compromising the floating operation of the stabilizer.

On occasions when it is necessary to change the length of the stabilizer, it suffices to release the wrench 22 from the stabilizer 10, in particular, by removing the ring 28 and slipping the stem 24 off the rod 25, as shown in Figure 2. It is thus possible to use the wrench 22 in known manner by fitting it astride the tubular body 14 in the region of the flattened walls 20 and rotating the tubular body by acting on the stem 24, which is used as a grip. As is known, rotation of the tubular body 14 in one direction or the other brings about screwing-up or unscrewing of the end shank (not shown) connected to the thread 17 in the end 16 of the tubular body, and consequent lengthening or shortening of the stabilizer 10. Upon completion of the adjustment operation, after the flattened walls 20 have been returned to the position parallel to the rod 25, it suffices to fit and secure the wrench on the rod 25 again in order to return to the configuration of normal use in which the wrench 22 covers and protects the mouth of the shell 12 and at the same time guides the sliding of the tubular body 14 therein, preventing it from rotating about the longitudinal axis of the stabilizer 10.

Naturally, the principle of the invention remaining the same, the forms of embodiment and details of construction may be varied widely with respect to those described and illustrated, without thereby departing from the scope of the present invention.

## Claims

1. Protection, operation and adjustment device for a stabilizer for three-point couplings, of the type comprising a first stabilizer member (12) and a second stabilizer member (14) coupled with one another telescopically so as to be slidable along an axis and defining, in a telescopic coupling region, spaces (30) between the inner wall of the first stabilizer member (12) and the outer wall of the second stabilizer member (14), the device comprising guide means (22) for selectively preventing relative rotation of the two stabilizer members (12, 14) about the sliding axis, **characterized in that** the guide means include widened portions (21) which can substantially cover the spaces (30) between the two stabilizer members (12, 14) in the telescopic coupling region, in use.

2. Device according to Claim 1, **characterized in that** the guide means (22) comprise means (24, 28) for selective connection to one of the two stabilizer members (12).

3. Device according to Claim 2, **characterized in that** the connection means comprise a tubular stem or sleeve (24) which can be fitted on a rod (25) which extends from one of the two stabilizer members.

4. Device according to Claim 3, **characterized in that** the connection means comprise selectively removable retaining means (28) which can hold the guide means (22) in a fixed position on the stabilizer member (12), in use.

5. Device according to Claim 1, **characterized in that** the guide means (22) comprise guide portions (21) for preventing rotation, which guide portions (21) engage one of the two stabilizer members (14) with prismatic coupling.

6. Device according to Claim 5, **characterized in that** the guide portions for preventing rotation are defined by the widened portions.

7. Device according to Claim 6, **characterized in that** the widened portions are defined by a pair of substantially parallel arms (21) which are mounted astride at least a portion of the second stabilizer member (14), in the region of a corresponding pair of flattened walls (20) thereof.

8. Device according to Claims 3 and 5, **characterized in that** it can be disconnected from the stabilizer (10) selectively in order to act as a wrench for rotating and adjusting one of the two stabilizer members by virtue of the prismatic coupling, the tubular stem or sleeve (24) acting as a grip for the operation of the device.

9. Automatic lateral stabilizer which can control the lateral travel of the lower arms of a three-point coupling of an agricultural tractor, of the type comprising a first stabilizer member (12) and a second stabilizer member (14), coupled with one another telescopically so as to be slidable along an axis and defining, in a telescopic coupling region, spaces (30) between the inner wall of the first stabilizer member (12) and the outer wall of the second stabilizer member (14), **characterized in that** it comprises a protection, operation and adjustment device according to any one of the preceding claims.

10. Automatic stabilizer as described and illustrated and for the purposes specified.
